# EUROPEAN PATENT APPLICATION

(11) **EP 4 362 348 A1**
(43) Date of publication of application: **01.05.2024**
(21) Application number: 21946454.2
(22) Date of filing: 24.06.2021
(51) Int. Cl.: H04B 7/155, H04B 7/185, H04W 72/04, H04W 16/28

(54) **BEAM SWITCHING METHOD AND APPARATUS, USER EQUIPMENT, BASE STATION, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: dompatent von Kreisler Selting Werner - Partnerschaft von Patent- und Rechtsanwälten mbB
(86) International application number: PCT/CN2021/102183
(87) International publication number: WO 2022/266958

(57) **Abstract**

The present disclosure relates to the technical field of communications, and provides a beam switching method and apparatus, a user equipment, a base station, and a storage medium. The method comprises: a satellite UE may determine whether the satellite UE needs to switch a serving beam, and perform service beam switching on the satellite UE on the basis of a determination result. Hence, the beam switching method provided in the present disclosure can quickly and accurately switch beams in an NTN system, ensure the continuity of a service, and has high efficiency.

## Description

### TECHNICAL FIELD

The disclosure relates to a field of communication technologies, in particular to a beam switching method, a beam switching apparatus, a user equipment (UE), a base station and a storage medium.

### BACKGROUND

The Non-Terrestrial Network (NTN) system is widely used in a communication field due to its characteristics of wide coverage, strong disaster resistance and large capacity. However, how to realize efficient beam switching in the NTN system is a problem that needs to be solved urgently.

### SUMMARY

The disclosure provides a beam switching method, a beam switching apparatus, a user equipment (UE), a base station and a storage medium, to provide an efficient beam switching method applied to the NTN system.

According to an aspect of embodiments of the disclosure, a beam switching method, performed by a satellite UE, is provided. The method includes:
determining whether the satellite UE needs to perform service beam switching; and
performing the service beam switching on the satellite UE based on a determination result.

According to another aspect of embodiments of the disclosure, a beam switching method, performed by a base station, is provided. The method includes:
sending configuration information to a satellite UE, in which the configuration information includes a candidate beam set and/or a candidate BWP set;
in which, when the configuration information includes the candidate beam set and the candidate BWP set, if a candidate beam in the candidate beam set has a binding relation with a candidate BWP in the candidate BWP set, the configuration information further includes the binding relation between the candidate beam and the candidate BWP.

According to another aspect of embodiments of the disclosure, a beam switching apparatus is provided. The apparatus includes:
a determining module, configured to determine whether a satellite UE needs to perform service beam switching; and
a switching module, configured to perform the service beam switching on the satellite UE based on a determination result.

According to another aspect of embodiments of the disclosure, a beam switching apparatus is provided. The apparatus includes:
a sending module, configured to send configuration information to a satellite UE, in which the configuration information includes a candidate beam set and/or a candidate BWP set;
in which, when the configuration information includes the candidate beam set and the candidate BWP set, if a candidate beam in the candidate beam set has a binding relation with a candidate BWP in the candidate BWP set, the configuration information further includes the binding relation between the candidate beam and the candidate BWP.

According to another aspect of embodiments of the disclosure, a UE is provided. The UE includes: a transceiver, a memory, and a processor connected to the transceiver and the memory respectively. The UE is configured to control sending and receiving of wireless signals of the transceiver by executing computer-executable instructions on the memory, and capable of performing the method of embodiments of the above aspect.

According to another aspect of embodiments of the disclosure, a base station is provided. The base station includes: a transceiver, a memory, and a processor connected to the transceiver and the memory respectively. The base station is configured to control sending and receiving of wireless signals of the transceiver by executing computer-executable instructions on the memory, and capable of performing the method of embodiments of the above aspect.

According to another aspect of embodiments of the disclosure, a computer storage medium having computer-executable instructions stored thereon is provided. When the computer-executable instructions are executed by a processor, the above methods can be implemented.

In conclusion, according to the beam switching method, the beam switching apparatus, the UE, the base station and the storage medium provided by the embodiments of the disclosure, the satellite UE may determine whether it needs to perform service beam switching, and can perform the service beam switching on the satellite UE based on a determination result. In the embodiment of the disclosure, the satellite UE determines whether to perform the service beam switching based on a trigger event. When it is determined that the satellite UE needs to perform the service beam switching based on the trigger event, it can perform the service beam switching, so that the beam switching can be performed quickly and accurately in the NTN system, thereby ensuring service continuity and high efficiency.

Additional aspects and advantages of embodiments of disclosure will be given in part in the following descriptions, become apparent in part from the following descriptions, or be learned from the practice of the embodiments of the disclosure.

### BRIEF DESCRIPTION OF THE DRAWINGS

The foregoing and/or additional aspects and advantages of the disclosure will become apparent and easily understood from the following description of the embodiments in combination with the accompanying drawings.
FIG. 1 is a flowchart of a beam switching method provided by an embodiment of the disclosure.
FIG. 2 is a flowchart of a beam switching method provided by an embodiment of the disclosure.
FIG. 3 is a flowchart of a beam switching method provided by an embodiment of the disclosure.
FIG. 4 is a flowchart of a beam switching method provided by an embodiment of the disclosure.
FIG. 5 is a flowchart of a beam switching method provided by an embodiment of the disclosure.
FIG. 6 is a flowchart of a beam switching method provided by an embodiment of the disclosure.
FIG. 7 is a flowchart of a beam switching method provided by an embodiment of the disclosure.
FIG. 8 is a flowchart of a beam switching method provided by an embodiment of the disclosure.
FIG. 9 is a flowchart of a beam switching method provided by an embodiment of the disclosure.
FIG. 10 is a flowchart of a beam switching method provided by an embodiment of the disclosure.
FIG. 11 is a flowchart of a beam switching method provided by an embodiment of the disclosure.
FIG. 12 is a flowchart of a beam switching method provided by an embodiment of the disclosure.
FIG. 13 is a flowchart of a beam switching method provided by an embodiment of the disclosure.
FIG. 14 is a flowchart of a beam switching method provided by an embodiment of the disclosure.
FIG. 15 is a flowchart of a beam switching method provided by an embodiment of the disclosure.
FIG. 16 is a schematic diagram of a beam switching apparatus provided by an embodiment of the disclosure.
FIG. 17 is a schematic diagram of a beam switching apparatus provided by an embodiment of the disclosure.
FIG. 18 is a block diagram of a UE provided by an embodiment of the disclosure.
FIG. 19 is a block diagram of a base station provided by an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the embodiments of the disclosure. Instead, they are merely examples of apparatuses and methods consistent with aspects related to the embodiments of the disclosure as recited in the appended claims.

The terms used in the embodiments of the disclosure are only for the purpose of describing specific embodiments, and are not intended to limit the embodiments of the disclosure. The singular forms of "a" and "the" used in the embodiments of the disclosure and the appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

The embodiments of the disclosure are described in detail below, and examples of which are illustrated in the accompanying drawings, in which the same or similar symbols throughout indicate the same or similar elements. The embodiments described below by reference to the accompanying drawings are exemplary and are intended to be used to explain the disclosure and are not to be construed as limiting the disclosure.

In a beam switching method provided in the embodiments of the disclosure, a satellite user equipment (UE) may determine whether it needs to switch a service beam, and service switching may be performed on the satellite UE based on a determination result. In the embodiment of the disclosure, the satellite UE determines whether it needs to switch the service beam based on a trigger event. When the satellite UE determines that it needs to switch the service beam, it can perform service beam switching, so that beam switching can be performed quickly and accurately in a Non-Terrestrial Network (NTN) system, thereby ensuring service continuity and high efficiency.

A beam switching method, a beam switching apparatus, a UE, a base station and a storage medium provided by the disclosure are described in detail below with reference to the accompanying drawings.

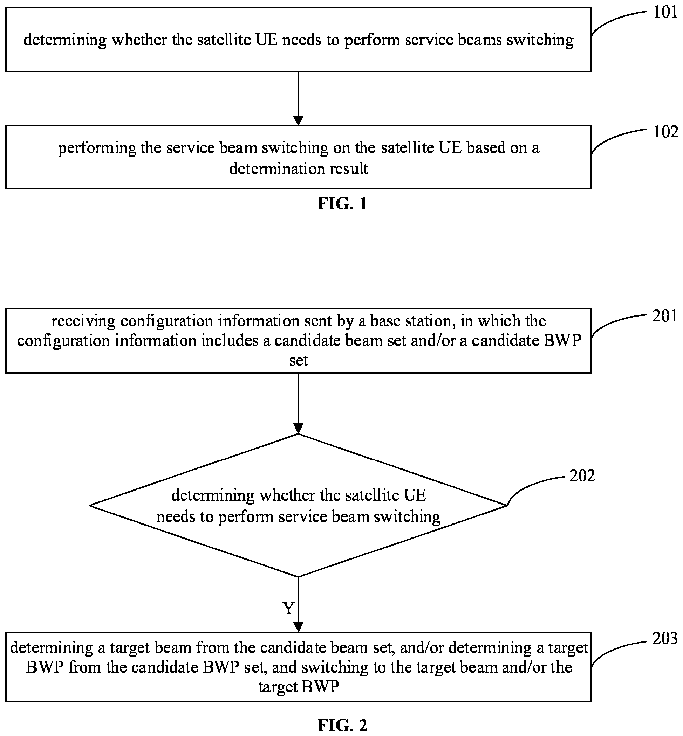

FIG. 1 is a flowchart of a beam switching method provided by an embodiment of the disclosure. The method is performed by a satellite UE. As illustrated in FIG. 1, the beam switching method includes the following steps.

Step 101, it is determined whether the satellite UE needs to perform service beam switching.

It is noted that the method in the embodiment of the disclosure can be used in any satellite UE. The satellite UE may be a device that provides voice and/or data connectivity to a user. The satellite UE may communicate with one or more core networks via a Radio Access Network (RAN). The satellite UE may be an Internet of Things (IoT) UE, such as a sensor device, a mobile phone (or "cellular" phone), and a computer with an IoT terminal. For example, the satellite UE may be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, or a user agent. Or, the satellite UE may be an unmanned aerial vehicle device. Or, the satellite UE may be an in-vehicle device, such as, an electronic control unit (ECU) having a wireless communication function, or a wireless communication device external to the ECU. Or, the satellite UE can also be a roadside device, such as, a street light, a signal light, or other roadside devices having the wireless communication function.

In an embodiment of the disclosure, performing the service beam switching may refer to that the satellite UE performs switching among multiple service beams within a coverage area of a corresponding satellite. In another embodiment of the disclosure, performing the service beam switching may also refer to that the satellite UE performs switching between a service beam within the coverage area of the corresponding satellite and a service beam within a coverage area of other satellites.

In an embodiment of the disclosure, determining whether the satellite UE needs to perform the service beam switching may include: determining whether the satellite UE needs to perform the service beam switching based on a trigger event.

In an embodiment of the disclosure, the trigger event may include at least one of:
a location-based trigger event, a signal quality-based trigger event, or a time-based trigger event.

In detail, in an embodiment of the disclosure, the trigger event may only include the location-based trigger event.

In an embodiment of the disclosure, the location-based trigger event may include: determining whether to perform the service beam switching based on a distance between a location of the satellite UE and a coverage boundary of a current service beam of the satellite UE; and/or determining whether to perform the service beam switching based on a signal quality of the current service beam.

In an embodiment of the disclosure, determining whether to perform the service beam switching based on the distance between the location of the satellite UE and the coverage boundary of the current service beam of the satellite UE may include: if the distance between the location of the satellite UE and the coverage boundary of the current service beam of the satellite UE is less than a preset distance threshold, determining that the satellite UE is about to leave the coverage boundary of the current service beam, and determining that the satellite UE needs to perform the service beam switching.

In an embodiment of the disclosure, determining whether to perform the service beam switching based on the signal quality of the current service beam may include: if the signal quality of the current service beam of the satellite UE is less than a first preset quality threshold, determining that the satellite UE has poor signal quality and may be located at the coverage boundary of the current service beam, and determining that the satellite UE needs to perform the service beam switching.

It should be noted that, in an embodiment of the disclosure, the location-based trigger event may only include: determining whether to perform the service beam switching based on the distance between the location of the satellite UE and the coverage boundary of the current service beam of the satellite UE. In another embodiment of the disclosure, the location-based trigger event may only include: determining whether to perform the service beam switching based on the signal quality of the current service beam. In another embodiment of the disclosure, the location-based trigger event may include: determining whether to perform the service beam switching based on both the distance between the location of the satellite UE and the coverage boundary of the current service beam of the satellite UE and the signal quality of the current service beam.

In an embodiment of the disclosure, when determining whether to perform the service beam switching based on both the distance between the location of the satellite UE and the coverage boundary of the current service beam of the satellite UE and the signal quality of the current service beam, if the satellite UE satisfies any of the conditions, it is determined that the satellite UE needs to perform the service beam switching.

For example, in an embodiment of the disclosure, when determining whether to perform the service beam switching based on the distance between the location of the satellite UE and the coverage boundary of the current service beam of the satellite UE and the signal quality of the current service beam, if the distance between the location of the satellite UE and the coverage boundary of the current service beam of the satellite UE is less than the preset distance threshold, or if the signal quality of the current service beam of the satellite UE is less than the first preset quality threshold, it is determined that the satellite UE needs to perform the service beam switch.

In another embodiment of the disclosure, the above trigger event may only include the signal quality-based trigger event.

In an embodiment of the disclosure, the signal quality-based trigger event may include: determining whether to perform the service beam switching based on a signal quality of a neighboring service beam.

In detail, in an embodiment of the disclosure, determining whether to perform the service beam switching based on the signal quality of the neighboring service beam may include: when the satellite UE determines that the signal quality of the neighboring beam is greater than a second preset quality threshold, which indicates that the signal quality of the neighboring beam is better, determining that the satellite UE may switch to the neighboring service beam. In another embodiment of the disclosure, determining whether to perform the service beam switching based on the signal quality of the neighboring service beam may include: when a difference between the signal quality of the neighboring beam and a signal quality of the current service beam of the satellite UE is greater than a third preset quality threshold, which indicates that the signal quality of the current service beam is poor and the signal quality of the neighboring service beam is better, determining that the UE needs to switch to the neighboring service beam.

In another embodiment of the disclosure, the above trigger event may only include the time-based trigger event.

In an embodiment of the disclosure, the time-based trigger event may include: determining whether to perform the beam switching based on a preset service time period of the current service beam of the satellite UE and a time period served by the current service beam.

In detail, in an embodiment of the disclosure, determining whether to perform the beam switching based on the preset service time period of the current service beam of the satellite UE and the time period served by the current service beam may include the following. The satellite UE obtains time indication information sent by the base station, the time indication information is configured to indicate the preset service time period of the current service beam (i.e., a duration in which the current service beam need to provide service). The satellite UE may timing a time period served by the current service beam. When a difference between the time period served by the current service beam of the satellite UE and the preset service time period is less than a preset time threshold, which indicates that the service of the current service beam is about to end, it is determined that the satellite UE needs to perform the service beam switching.

For example, in an embodiment of the disclosure, the preset service time period of the current service beam of the satellite UE is 30 minutes and the preset time threshold is 5 minutes. When the current service beam of the satellite UE have been in service for a period longer than 25 minutes, it is determined that the satellite UE needs to perform the service beams witching.

It should be noted that in an embodiment of the disclosure, the above time indication information may directly be the preset service time period of the current service beam. In another embodiment of the disclosure, the time indication information may be satellite ephemeris information, and the satellite UE may determine the preset service time period of the current service beam based on the ephemeris information.

In another embodiment of the disclosure, the above trigger event may include the location-based trigger event and the signal quality-based trigger event.

In another embodiment of the disclosure, the above trigger event may include the location-based trigger event and the time-based trigger event.

In another embodiment of the disclosure, the above trigger event may include the signal quality-based trigger event and the time-based trigger event.

In another embodiment of the disclosure, the above trigger event may include the location-based trigger event, the signal quality-based trigger event and the time-based trigger event.

It should be noted that in an embodiment of the disclosure, when the above trigger event includes two or more trigger events, if any one of the trigger events is satisfied, it is determined that the satellite UE needs to perform the service beam switching.

For example, in an embodiment of the disclosure, the above trigger event includes the signal quality-based trigger event and the time-based trigger event. If it is determined that the UE needs to perform the service beam switching based only on the signal quality-based trigger event, or, if it is determined that the UE needs to perform the service beam switching based only on the time-based trigger event, it is determined that the UE needs to perform the service beam switching.

In an embodiment of the disclosure, a method for the satellite UE to obtain the above trigger event may be: the satellite UE determining the trigger event directly based on a protocol agreement. In another embodiment of the disclosure, the method for the satellite UE to obtain the above trigger event may be: the satellite UE receiving the trigger event sent by the base station via a high-layer signaling. In another embodiment of the disclosure, the method for the satellite UE to obtain the above trigger event may be: the satellite UE receiving the trigger event sent by the base station via a physical layer signaling.

Step 102, the service beam switching is performed on the satellite UE based on a determination result.

In an embodiment of the disclosure, the determination result is used to indicate whether the satellite UE needs to perform the service beam switching. When the determination result indicates that the satellite UE needs to perform the service beam switching, the service beam switching may be performed on the satellite UE. When the determination result indicates that the satellite UE does not need to perform the service beam switching, the service beam switching may be performed on the satellite UE.

In an embodiment of the disclosure, a method for performing the service beam switching on the satellite UE may be: the satellite UE performing the service beam switching autonomously. In another embodiment of the disclosure, the method for performing the service beam switching on the satellite UE may be: when the satellite UE determines that the service beam switching needs to be performed, sending second indication information to the base station, receiving a switching instruction sent based on the second indication information by the base station, and switching to a target beam according to the switching instruction.

In conclusion, according to the beam switching method provided by the embodiment of the disclosure, the satellite UE may determine whether it needs to perform the service beam switching, and may perform the service beam switching on the satellite UE based on the determination result. In the embodiment of the disclosure, the satellite UE determines whether to perform the service beam switching based on the trigger event. When it is determined that the satellite UE needs to perform the service beam switching based on the trigger event, the service beam switching can be performed, so that the beam switching can be performed quickly and accurately in the NTN system, thereby ensuring service continuity and high efficiency.

FIG. 2 is a flowchart of a beam switching method provided by an embodiment of the disclosure. The method is performed by a satellite UE. As illustrated in FIG. 2, the method includes the following steps.

Step 201, configuration information sent by a base station is received, in which the configuration information includes a candidate beam set and/or a candidate Bandwidth Part (BWP) set.

In an embodiment of the disclosure, the configuration information may only include the candidate beam set. In another embodiment of the disclosure, the configuration information may only include the candidate BWP set. In yet another embodiment of the disclosure, the configuration information may include both the candidate beam set and the candidate BWP set.

In an embodiment of the disclosure, when the configuration information includes both the candidate beam set and the candidate BWP set, if there is a candidate beam in the candidate beam set that is in a binding relation with a candidate BWP in the candidate BWP set, the configuration information may further include the binding relation between the candidate beam and the candidate BWP.

It should be noted that when the configuration information includes both the candidate beam set and the candidate BWP set, and there is a binding relation between the candidate beam and the candidate BWP, in an embodiment of the disclosure, the binding relation between the candidate beam and the candidate BWP may be a one-to-one correspondence. For example, beam1 may be bound to BWP1. In another embodiment of the disclosure, the binding relation between the candidate beam and the candidate BWP may be a one-to-many correspondence. For example, beam3 may be bound to BWP4 and BWP5 respectively. In yet another embodiment of the disclosure, the binding relation between the candidate beam and the candidate BWP may be a many-to-one correspondence. For example, both beam4 and beam5 may be bound to BWP6.

Step 202, it is determined whether the satellite UE needs to perform service beam switching.

Description of determining whether the satellite UE needs to perform the service beam switching may be made in detail with reference to the description in the above first embodiment, which is not repeated here in the embodiments of the disclosure.

When a determination result indicates that the satellite UE needs to perform the service beam switching, step 203 may be further executed. When the determination result indicates that the satellite UE does not need to perform the service beam switching, the operation is stopped.

Step 203, a target beam is determined from the candidate beam set, and/or a target BWP is determined from the candidate BWP set, and it switches to the target beam and/or the target BWP.

In an embodiment of the disclosure, the satellite UE may only determine the target beam, and then autonomously switch to the target beam. In another embodiment of the disclosure, the satellite UE may only determine the target BWP, and then autonomously switch to the target BWP. In yet another embodiment of the disclosure, the satellite UE may determine both the target beam and the target BWP that are in a binding relation, and then autonomously switch to the target beam and the target BWP.

It should be noted that in an embodiment of the disclosure, when the UE determines both the target beam and the target BWP, if there are multiple BWPs bound to the target beam, any one of the multiple BWPs may be selected from the multiple BWPs as the target BWP. In another embodiment of the disclosure, if there are multiple beams bound to the target BWP, any one of the multiple beams may be selected from the multiple beams as the target beam.

For example, it is determined that beam3 is the target beam and both BWP4 and BWP5 are bound to beam3, thus, either BWP4 or BWP5 can be determined as the target BWP.

It is determined that BWP6 is the target BWP and both beam4 and beam5 are bound to BWP6, thus, either beam4 or beam5 can be determined as the target beam.

In conclusion, according to the beam switching method provided by the embodiments of the disclosure, the satellite UE may determine whether it needs to perform the service beam switching, and can perform the service beam switching on the satellite UE based on the determination result. In the embodiment of the disclosure, the satellite UE determines whether to perform the service beam switching based on a trigger event. When it is determined that the satellite UE needs to perform the service beam switching based on the trigger event, the satellite UE can perform the service beam switching autonomously, so that the beam switching can be performed quickly and accurately in the NTN system, thereby ensuring service continuity and high efficiency.

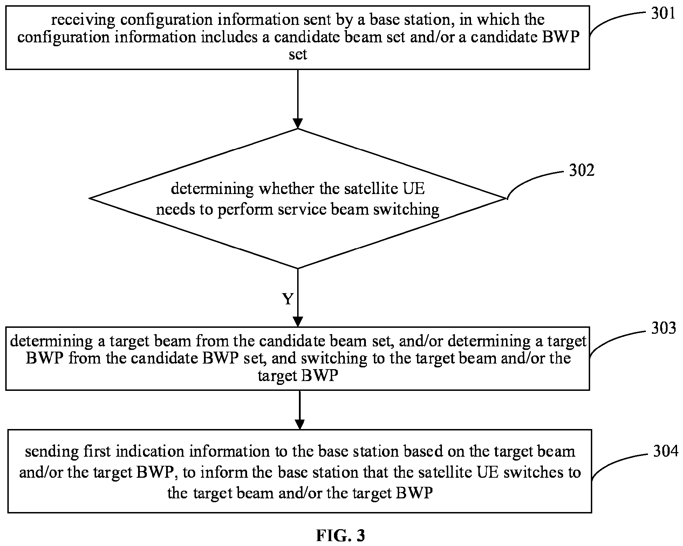

FIG. 3 is a flowchart of a beam switching method provided by an embodiment of the disclosure. The method is performed by a satellite UE. As illustrated in FIG. 3, the method includes the following steps.

Step 301, configuration information sent by a base station is received, in which the configuration information includes a candidate beam set and/or a candidate BWP set.

When the configuration information includes both the candidate beam set and the candidate BWP set, if there is a candidate beam in the candidate beam set that is in a binding relation with a candidate BWP in the candidate BWP set, the configuration information further includes the binding relation between the candidate beam and the candidate BWP.

Step 302, it is determined whether the satellite UE needs to perform service beam switching.

When a determination result indicates that the satellite UE needs to perform the service beam switching, step 303 can be further executed. When the determination result indicates that the satellite UE does not need to perform the service beam switching, the operation is stopped.

Step 303, a target beam is determined from the candidate beam set, and/or a target BWP is determined from the candidate BWP set, and it switches to the target beam and/or the target BWP.

Detailed descriptions of steps 301 to 303 can be referred to the relevant descriptions in the above embodiments, which are not repeated in the embodiments of the disclosure.

Step 304, first indication information is sent to the base station based on the target beam and/or the target BWP, to inform the base station that the satellite UE switches to the target beam and/or the target BWP.

In an embodiment of the disclosure, when the satellite UE successfully switches to the target beam and/or the target BWP, the satellite UE may send the first indication information to the base station via the target beam and/or the target BWP in a preset time period, to inform the base station that the satellite UE switches to the target beam and/or the target BWP, so that the base station may subsequently communicate with the satellite UE based on the target beam and/or the target BWP, thereby ensuring service continuity.

In conclusion, according to the beam switching method provided by the embodiments of the disclosure, the satellite UE may determine whether it needs to perform the service beam switching, and can perform the service beam switching on the satellite UE based on the determination result. In the embodiment of the disclosure, the satellite UE determines whether to perform the service beam switching based on a trigger event. When it is determined that the satellite UE needs to perform the service beam switching based on the trigger event, the satellite UE can perform the service beam switching autonomously, so that the beam switching can be performed quickly and accurately in the NTN system, thereby ensuring service continuity and high efficiency. In the embodiment of the disclosure, after the satellite UE autonomously switches to the target beam and/or the target BWP, it may send the first indication information to the base station via the target beam and/or the target BWP to make the base station aware of beam information and/or BWP information after the satellite UE performs the service beam switching, to ensure normal communication between the base station and the satellite UE, and further ensure the service continuity.

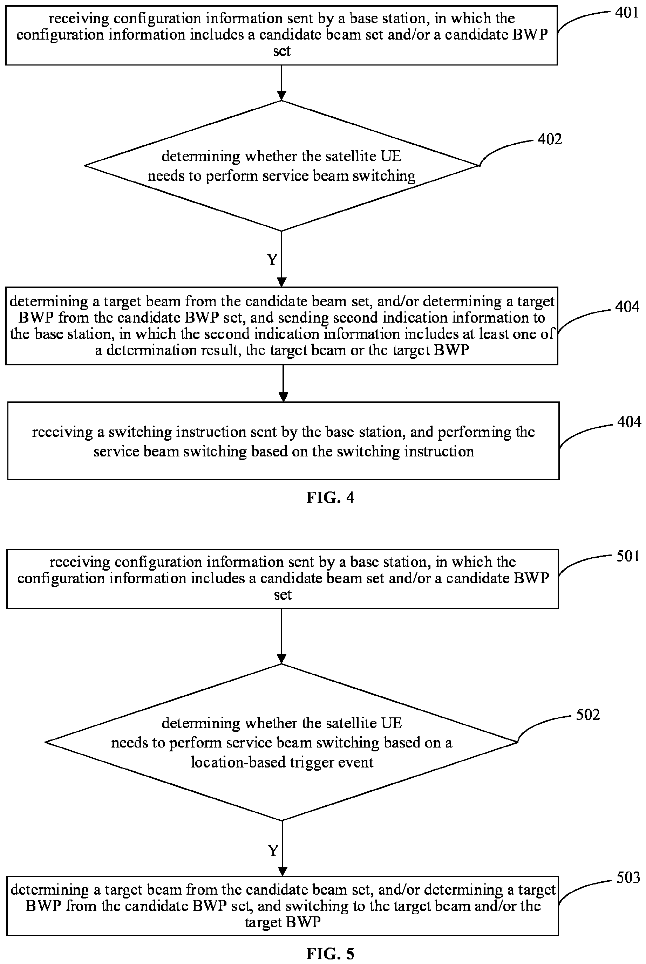

FIG. 4 is a flowchart of a beam switching method provided by an embodiment of the disclosure. The method is performed by a satellite UE. As illustrated in FIG. 4, the method includes the following steps.

Step 401, configuration information sent by a base station is received, in which the configuration information includes a candidate beam set and/or a candidate BWP set.

When the configuration information includes both the candidate beam set and the candidate BWP set, if there is a candidate beam in the candidate beam set that is in a binding relation with a candidate BWP in the candidate BWP set, the configuration information further includes the binding relation between the candidate beam and the candidate BWP.

Step 402, it is determined whether the satellite UE needs to perform service beam switching.

Detailed descriptions of steps 401 to 402 can be referred to the relevant descriptions in the above embodiments, which are not repeated in the embodiments of the disclosure.

When a determination result indicates that the satellite UE needs to perform the service beam switching, step 403 can be further executed.

Step 403, a target beam is determined from the candidate beam set, and/or a target BWP is determined from the candidate BWP set, and second indication information is sent to the base station, in which the second indication information includes at least one of the determination result, the target beam or the target BWP.

A detailed description of the satellite UE determining the target beam from the candidate beam set, and/or, determining the target BWP from the candidate BWP set can be referred to the relevant descriptions in the above mentioned embodiments, which is not repeated in the embodiments of the disclosure.

In an embodiment of the disclosure, the second indication information may only include the determination result. In another embodiment of the disclosure, the second indication information may only include the target beam. In yet another embodiment of the disclosure, the second indication information may only include the target BWP. In yet another embodiment of the disclosure, the second indication information may include the determination result and the target beam. In yet another embodiment of the disclosure, the second indication information may include the determination result and the target BWP. In yet another embodiment of the disclosure, the second indication information may include the target beam and the target BWP. In yet another embodiment of the disclosure, the second indication information may include the determination result, the target beam, and the target BWP.

Step 404, a switching instruction sent by the base station is received, and the service beam switching is performed based on the switching instruction.

It is noted that in an embodiment of the disclosure, when the indication information sent at step 403 only include the determination result, the switching instruction may further include the target beam and/or the target BWP. The target beam and/or the target BWP is selected by the base station in the candidate beam set and/or the candidate BWP set when the determination result sent by the satellite UE indicates that the satellite UE needs to perform the service beam switching. A specific selection method is consistent with the above-described method of selecting the target beam and/or the target BWP by the UE, which is not repeated in the embodiments of the disclosure.

In conclusion, according to the beam switching method provided by the embodiments of the disclosure, the satellite UE may determine whether it needs to perform the service beam switching, and can perform the service beam switching on the satellite UE based on the determination result. In the embodiment of the disclosure, when the satellite UE determines that it needs to perform the service beam switching, it may send the second indication information to the base station and receive the switching instruction sent based on the second indication information by the base station. The satellite UE performs the service beam switching based on the switching instruction, so that the beam switching can be performed quickly and accurately in the NTN system, thereby ensuring service continuity and high efficiency.

FIG. 5 is a flowchart of a beam switching method provided by an embodiment of the disclosure. The method is performed by a satellite UE. As illustrated in FIG. 5, the method includes the following steps.

Step 501, configuration information sent by a base station is received, in which the configuration information includes a candidate beam set and/or a candidate BWP set.

When the configuration information includes both the candidate beam set and the candidate BWP set, if there is a candidate beam in the candidate beam set that is in a binding relation with a candidate BWP in the candidate BWP set, the configuration information further includes the binding relation between the candidate beam and the candidate BWP.

Step 502, it is determined whether the satellite UE needs to perform service beam switching based on a location-based trigger event.

In an embodiment of the disclosure, when it is determined that the satellite UE needs to perform the service beam switching, step 503 is executed.

Step 503, a target beam is determined from the candidate beam set, and/or a target BWP is determined from the candidate BWP set, and it switches to the target beam and/or the target BWP.

Detailed descriptions of steps 501 to 503 can be referred to the relevant descriptions in the above embodiments, which are not repeated in the embodiments of the disclosure.

In conclusion, according to the beam switching method provided by the embodiments of the disclosure, the satellite UE may determine whether it needs to perform the service beam switching, and can perform the service beam switching on the satellite UE based on a determination result. In the embodiment of the disclosure, the satellite UE determines whether it needs to perform the service beam switching based on the location-based trigger event. When it is determined that the satellite UE needs to perform the service beam switching based on the trigger event, the satellite UE may perform the service beam switching autonomously, so that the beam switching can be performed quickly and accurately in the NTN system, thereby ensuring service continuity and high efficiency.

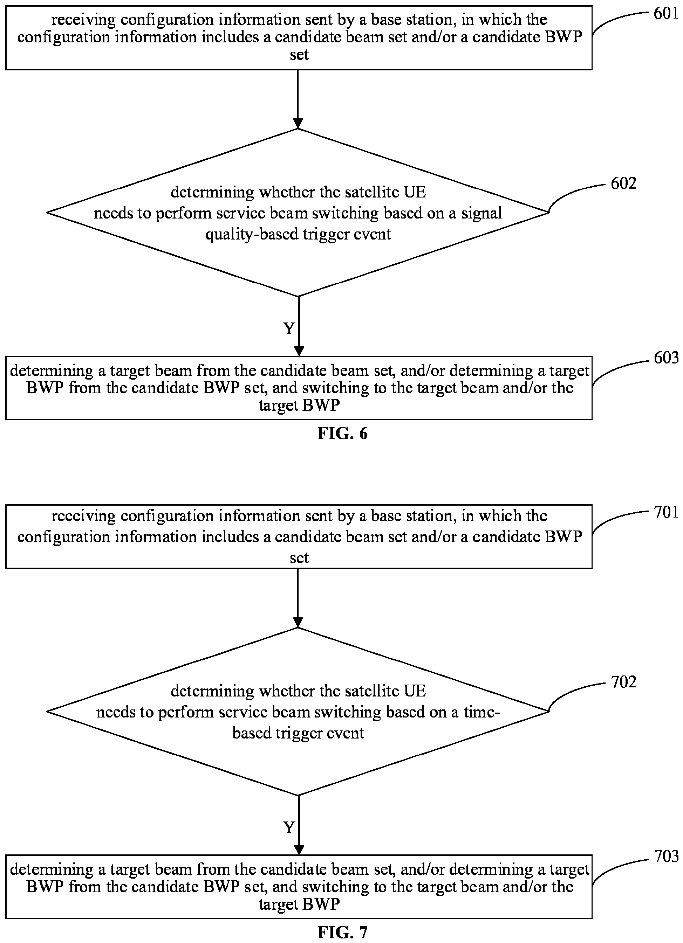

FIG. 6 is a flowchart of a beam switching method provided by an embodiment of the disclosure. The method is performed by a satellite UE. As illustrated in FIG. 6, the method includes the following steps.

Step 601, configuration information sent by a base station is received, in which the configuration information includes a candidate beam set and/or a candidate BWP set.

When the configuration information includes both the candidate beam set and the candidate BWP set, if there is a candidate beam in the candidate beam set that is in a binding relation with a candidate BWP in the candidate BWP set, the configuration information further includes the binding relation between the candidate beam and the candidate BWP.

Step 602, it is determined whether the satellite UE needs to perform service beam switching based on a signal quality-based trigger event.

In an embodiment of the disclosure, when it is determined that the satellite UE needs to perform the service beam switching, step 603 is further executed.

Step 603, a target beam is determined from the candidate beam set, and/or a target BWP is determined from the candidate BWP set, and it switches to the target beam and/or the target BWP.

Detailed descriptions of steps 601 to 603 can be referred to the relevant descriptions in the above embodiments, which are not repeated in the embodiments of the disclosure.

In conclusion, according to the beam switching method provided by the embodiments of the disclosure, the satellite UE may determine whether it needs to perform the service beam switching, and can perform the service beam switching on the satellite UE based on a determination result. In the embodiment of the disclosure, the satellite UE determines whether it needs to perform the service beam switching based on the signal quality-based trigger event. When it is determined that the satellite UE needs to perform the service beam switching based on the trigger event, the satellite UE may perform the service beam switching autonomously, so that the beam switching can be performed quickly and accurately in the NTN system, thereby ensuring service continuity and high efficiency.

FIG. 7 is a flowchart of a beam switching method provided by an embodiment of the disclosure. The method is performed by a satellite UE. As illustrated in FIG. 7, the method includes the following steps.

Step 701, configuration information sent by a base station is received, in which the configuration information includes a candidate beam set and/or a candidate BWP set.

When the configuration information includes both the candidate beam set and the candidate BWP set, if there is a candidate beam in the candidate beam set that is in a binding relation with a candidate BWP in the candidate BWP set, the configuration information further includes the binding relation between the candidate beam and the candidate BWP.

Step 702, it is determined whether the satellite UE needs to perform service beam switching based on a time-based trigger event.

In an embodiment of the disclosure, when it is determined that the satellite UE needs to perform the service beam switching, step 703 is further executed.

Step 703, a target beam is determined from the candidate beam set, and/or a target BWP is determined from the candidate BWP set, and it switches to the target beam and/or the target BWP.

Detailed descriptions of steps 701 to 703 can be referred to the relevant descriptions in the above embodiments, which are not repeated in the embodiments of the disclosure.

In conclusion, according to the beam switching method provided by the embodiments of the disclosure, the satellite UE may determine whether it needs to perform the service beam switching, and can perform the service beam switching on the satellite UE based on a determination result. In the embodiment of the disclosure, the satellite UE determines whether it needs to perform the service beam switching based on the time-based trigger event. When it is determined that the satellite UE needs to perform the service beam switching based on the trigger event, the satellite UE may perform the service beam switching autonomously, so that the beam switching can be performed quickly and accurately in the NTN system, thereby ensuring service continuity and high efficiency.

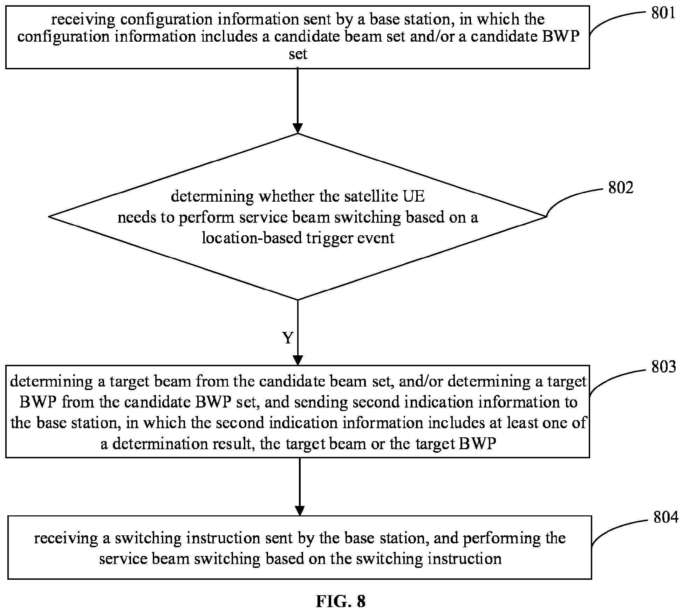

FIG. 8 is a flowchart of a beam switching method provided by an embodiment of the disclosure. The method is performed by a satellite UE. As illustrated in FIG. 8, the method includes the following steps.

Step 801, configuration information sent by a base station is received, in which the configuration information includes a candidate beam set and/or a candidate BWP set.

When the configuration information includes both the candidate beam set and the candidate BWP set, if there is a candidate beam in the candidate beam set that is in a binding relation with a candidate BWP in the candidate BWP set, the configuration information further includes the binding relation between the candidate beam and the candidate BWP.

Step 802, it is determined whether the satellite UE needs to perform service beam switching based on a location-based trigger event.

In an embodiment of the disclosure, when it is determined that the satellite UE needs to perform the service beam switching, step 803 is further executed.

Step 803, a target beam is determined from the candidate beam set, and/or a target BWP is determined from the candidate BWP set, and second indication information is sent to the base station, in which the second indication information includes at least one of a determination result, the target beam or the target BWP.

Step 804, a switching instruction sent by the base station is received, and the service beam switching is performed based on the switching instruction.

Detailed descriptions of steps 801 to 804 can be referred to the relevant descriptions in the above embodiments, which are not repeated in the embodiments of the disclosure.

In conclusion, according to the beam switching method provided by the embodiments of the disclosure, the satellite UE may determine whether it needs to perform the service beam switching, and can perform the service beam switching on the satellite UE based on the determination result. In the embodiment of the disclosure, when the satellite UE determines that it needs to perform the service beam switching, it may send the second indication information to the base station and receive the switching instruction sent based on the second indication information by the base station. The satellite UE performs the service beam switching based on the switching instruction, so that the beam switching can be performed quickly and accurately in the NTN system, thereby ensuring service continuity and high efficiency.

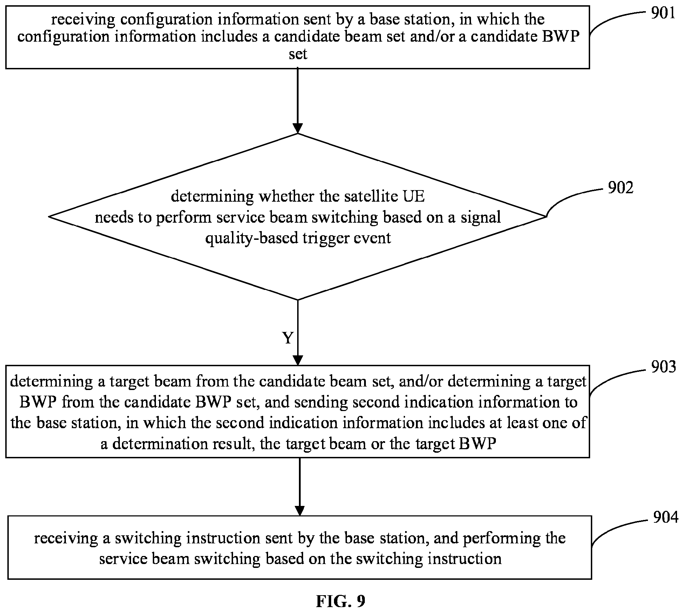

FIG. 9 is a flowchart of a beam switching method provided by an embodiment of the disclosure. The method is performed by a satellite UE. As illustrated in FIG. 9, the method includes the following steps.

Step 901, configuration information sent by a base station is received, in which the configuration information includes a candidate beam set and/or a candidate BWP set.

When the configuration information includes both the candidate beam set and the candidate BWP set, if there is a candidate beam in the candidate beam set that is in a binding relation with a candidate BWP in the candidate BWP set, the configuration information further includes the binding relation between the candidate beam and the candidate BWP.

Step 902, it is determined whether the satellite UE needs to perform service beam switching based on a signal quality-based trigger event.

In an embodiment of the disclosure, when it is determined that the satellite UE needs to perform the service beam switching, step 903 is further executed.

Step 903, a target beam is determined from the candidate beam set, and/or a target BWP is determined from the candidate BWP set, and second indication information is sent to the base station, in which the second indication information includes at least one of a determination result, the target beam or the target BWP.

Step 904, a switching instruction sent by the base station is received, and the service beam switching is performed based on the switching instruction.

Detailed descriptions of steps 901 to 904 can be referred to the relevant descriptions in the above embodiments, which are not repeated in the embodiments of the disclosure.

In conclusion, according to the beam switching method provided by the embodiments of the disclosure, the satellite UE may determine whether it needs to perform the service beam switching, and can perform the service beam switching on the satellite UE based on the determination result. In the embodiment of the disclosure, when the satellite UE determines that it needs to perform the service beam switching, it may send the second indication information to the base station and receive the switching instruction sent based on the second indication information by the base station. The satellite UE performs the service beam switching based on the switching instruction, so that the beam switching can be performed quickly and accurately in the NTN system, thereby ensuring service continuity and high efficiency.

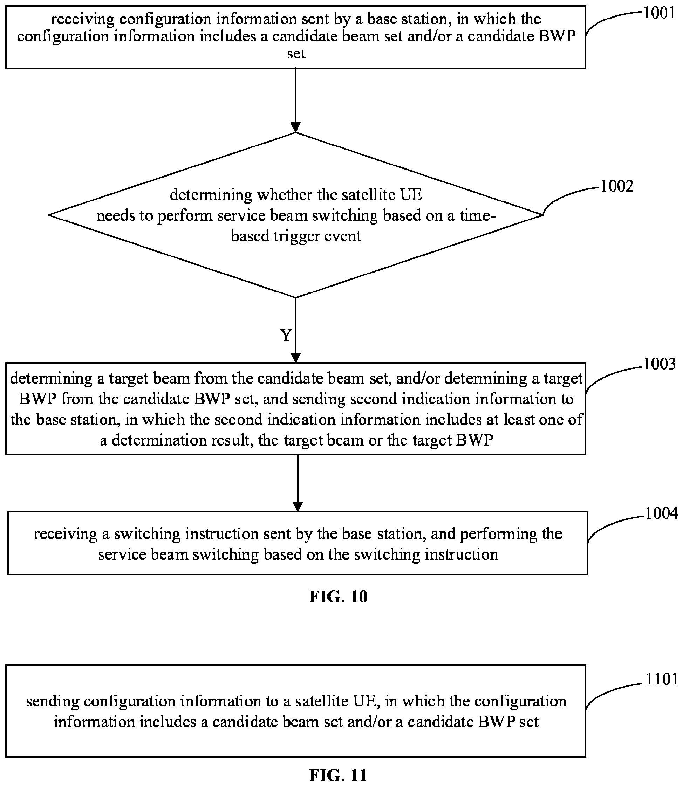

FIG. 10 is a flowchart of a beam switching method provided by an embodiment of the disclosure. The method is performed by a satellite UE. As illustrated in FIG. 10, the method includes the following steps.

Step 1001, configuration information sent by a base station is received, in which the configuration information includes a candidate beam set and/or a candidate BWP set.

When the configuration information includes both the candidate beam set and the candidate BWP set, if there is a candidate beam in the candidate beam set that is in a binding relation with a candidate BWP in the candidate BWP set, the configuration information further includes the binding relation between the candidate beam and the candidate BWP.

Step 1002, it is determined whether the satellite UE needs to perform service beam switching based on a time-based trigger event.

In an embodiment of the disclosure, when it is determined that the satellite UE needs to perform the service beam switching, step 1003 is further executed.

Step 1003, a target beam is determined from the candidate beam set, and/or a target BWP is determined from the candidate BWP set, and second indication information is sent to the base station, in which the second indication information includes at least one of a determination result, the target beam or the target BWP.

Step 1004, a switching instruction sent by the base station is received, and the service beam switching is performed based on the switching instruction.

Detailed descriptions of steps 1001 to 1004 can be referred to the relevant descriptions in the above embodiments, which are not repeated in the embodiments of the disclosure.

In conclusion, according to the beam switching method provided by the embodiments of the disclosure, the satellite UE may determine whether it needs to perform the service beam switching, and can perform the service beam switching on the satellite UE based on the determination result. In the embodiment of the disclosure, when the satellite UE determines that it needs to perform the service beam switching, it may send the second indication information to the base station and receive the switching instruction sent based on the second indication information by the base station. The satellite UE performs the service beam switching based on the switching instruction, so that the beam switching can be performed quickly and accurately in the NTN system, thereby ensuring service continuity and high efficiency.

FIG. 11 is a flowchart of a beam switching method provided by an embodiment of the disclosure. The method is performed by a base station. As illustrated in FIG. 11, the method includes the following steps.

Step 1101, configuration information is sent to a satellite UE, in which the configuration information includes a candidate beam set and/or a candidate BWP set.

In an embodiment of the disclosure, the configuration information may only include the candidate beam set. In another embodiment of the disclosure, the configuration information may only include the candidate BWP set. In yet another embodiment of the disclosure, the configuration information may include both the candidate beam set and the candidate BWP set.

In an embodiment of the disclosure, when the configuration information includes both the candidate beam set and the candidate BWP set, if there is a candidate beam in the candidate beam set that is in a binding relation with a candidate BWP in the candidate BWP set, the configuration information further includes the binding relation between the candidate beam and the candidate BWP.

It should be noted that when the configuration information includes both the candidate beam set and the candidate BWP set, and there is a binding relation between the candidate beam and the candidate BWP, in an embodiment of the disclosure, the binding relation between the candidate beam and the candidate BWP may be a one-to-one correspondence. For example, beam1 may be bound to BWP1. In another embodiment of the disclosure, the binding relation between the candidate beam and the candidate BWP may be a one-to-many correspondence. For example, beam3 may be bound to BWP4 and BWP5 respectively. In yet another embodiment of the disclosure, the binding relation between the candidate beam and the candidate BWP may be a many-to-one correspondence. For example, both beam4 and beam5 may be bound to BWP6.

In conclusion, according to the beam switching method provided by the embodiments of the disclosure, the base station may send the configuration information to the satellite UE, and the configuration information includes the candidate beam set and/or the candidate BWP set. When the configuration information includes both the candidate beam set and the candidate BWP set, if there is a candidate beam in the candidate beam set that is in a binding relation with a candidate BWP in the candidate BWP set, the configuration information further includes the binding relation between the candidate beam and the candidate BWP. In the embodiment of the disclosure, the satellite UE determines whether it needs to perform service beam switching based on a trigger event. When it is determined that the satellite UE needs to perform the service beam switching based on the trigger event, the satellite UE may perform the service beam switching, so that the beam switching can be performed quickly and accurately in the NTN system, thereby ensuring service continuity and high efficiency.

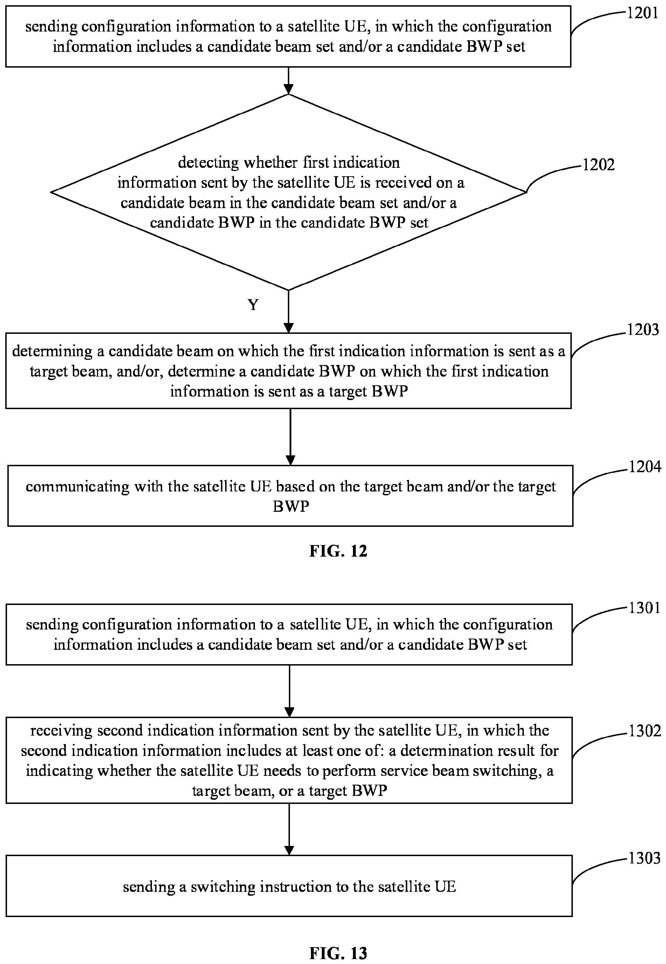

FIG. 12 is a flowchart of a beam switching method provided by an embodiment of the disclosure. The method is performed by a base station. As illustrated in FIG. 12, the method includes the following steps.

Step 1201, configuration information is sent to a satellite UE, in which the configuration information includes a candidate beam set and/or a candidate BWP set.

When the configuration information includes both the candidate beam set and the candidate BWP set, if there is a candidate beam in the candidate beam set that is in a binding relation with a candidate BWP in the candidate BWP set, the configuration information further includes the binding relation between the candidate beam and the candidate BWP.

In an embodiment of the disclosure, a detailed description of step 1201 can be referred to the relevant description in the above embodiments, which is not repeated in the embodiments of the disclosure.

Step 1202, it is detected whether first indication information sent by the satellite UE is received on a candidate beam in the candidate beam set and/or a candidate BWP in the candidate BWP set.

In an embodiment of the disclosure, when the satellite UE performs the service beam switching autonomously, the base station is unable to obtain a service beam that the satellite UE switches to. At this time, the service beams that the satellite UE switches to can be determined by the method of "detecting whether the first indication information sent by the satellite UE is received on the candidate beam in the candidate beam set and/or the candidate BWP in the candidate BWP set". When the base station receives the first indication information sent by the satellite UE, the base station may execute step 1203.

Step 1203, a candidate beam on which the first indication information is sent is determined as a target beam, and/or, a candidate BWP on which the first indication information is sent is determined as a target BWP.

Step 1204, it communicates with the satellite UE based on the target beam and/or the target BWP.

In conclusion, according to the beam switching method provided by the embodiments of the disclosure, the satellite UE may determine whether it needs to perform the service beam switching based on the trigger event. When it is determined that the satellite UE needs to perform the service beam switching based on the trigger event, the satellite UE may perform the service beam switching autonomously, so that the beam switching can be performed quickly and accurately in the NTN system, thereby ensuring service continuity and high efficiency. In the embodiment of the disclosure, when the satellite UE autonomously switches to the target beam and/or the target BWP, it may send the first indication information to the base station via the target beam and/or the target BWP to make the base station aware of beam information and/or BWP information after the satellite UE performs the service beam switching, and thus normal communication between the base station and the satellite UE is ensured, and the service continuity can be further ensured.

FIG. 13 is a flowchart of a beam switching method provided by an embodiment of the disclosure. The method is performed by a base station. As illustrated in FIG. 13, the method includes the following steps.

Step 1301, configuration information is sent to a satellite UE, in which the configuration information includes a candidate beam set and/or a candidate BWP set.

When the configuration information includes both the candidate beam set and the candidate BWP set, if there is a candidate beam in the candidate beam set that is in a binding relation with a candidate BWP in the candidate BWP set, the configuration information further includes the binding relation between the candidate beam and the candidate BWP.

In an embodiment of the disclosure, a detailed description of step 1301 can be referred to the relevant description in the above-described fifth embodiment, which is not repeated in the embodiments of the disclosure.

Step 1302, second indication information sent by the satellite UE is received, in which the second indication information includes at least one of: a determination result for indicating whether the satellite UE needs to perform service beam switching, a target beam, or a target BWP.

Step 1303, a switching instruction is sent to the satellite UE.

In detail, in an embodiment of the disclosure, when the second indication information only includes the determination result, after the base station receives the second indication information, if the determination result indicates that the satellite UE needs to perform the service beam switching, the base station may determine the target beam from the candidate beam set and/or determine the target BWP from the candidate BWP set based on the determination result, and then send the switching instruction including the target beam and/or the target BWP to the satellite UE, so that the satellite UE can switch to the target beam and/or the target BWP based on the switching instruction.

In conclusion, in the beam switching method provided in the embodiments of the disclosure, when the satellite UE determines that it needs to perform the service beam switching based on a trigger event, the base station may receive the second indication information, and the base station may send the switching instruction to the satellite UE based on the second indication information, so that the satellite UE can perform the service beam switching, and thus the beam switching can be performed quickly and accurately in the NTN system, thereby ensuring service continuity and high efficiency.

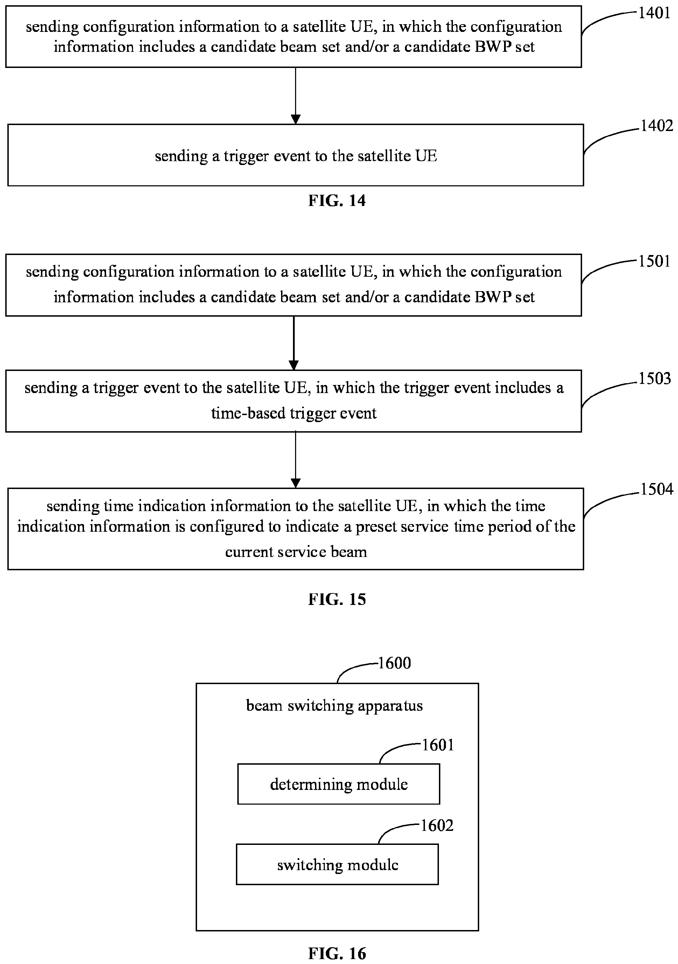

FIG. 14 is a flowchart of a beam switching method provided by an embodiment of the disclosure. The method is performed by a base station. As illustrated in FIG. 14, the method includes the following steps.

Step 1401, configuration information is sent to a satellite UE, in which the configuration information includes a candidate beam set and/or a candidate BWP set.

When the configuration information includes both the candidate beam set and the candidate BWP set, if there is a candidate beam in the candidate beam set that is in a binding relation with a candidate BWP in the candidate BWP set, the configuration information further includes the binding relation between the candidate beam and the candidate BWP.

In an embodiment of the disclosure, a detailed description of step 1401 can be referred to the relevant description in the above-described embodiments, which is not repeated in the embodiments of the disclosure.

Step 1402, a trigger event is sent to the satellite UE.

In an embodiment of the disclosure, a method of sending the trigger event from the base station to the satellite UE may be: sending the trigger event to the satellite UE via a high-layer signaling. In another embodiment of the disclosure, the method of sending the trigger event from the base station to the satellite UE may be: sending the trigger event to the satellite UE via a physical layer signaling. In another embodiment of the disclosure, the method of sending the trigger event from the base station to the satellite UE may be: indicating the trigger event to the satellite UE via a protocol.

A detailed description of the trigger event can be referred to the above embodiments, which is not repeated in the embodiments of the disclosure.

In conclusion, in the beam switching method provided by the embodiments of the disclosure, the satellite UE may determine whether it needs to perform service beam switching based on the trigger event. When it is determined that the satellite UE needs to perform the service beam switching based on the trigger event, the satellite UE may perform the service beam switching, so that the beam switching can be performed quickly and accurately in the NTN system, thereby ensuring service continuity and high efficiency.

FIG. 15 is a flowchart of a beam switching method provided by an embodiment of the disclosure. The method is performed by a base station. As illustrated in FIG. 15, the method includes the following steps.

Step 1501, configuration information is sent to a satellite UE, in which the configuration information includes a candidate beam set and/or a candidate BWP set.

When the configuration information includes both the candidate beam set and the candidate BWP set, if there is a candidate beam in the candidate beam set that is in a binding relation with a candidate BWP in the candidate BWP set, the configuration information further includes the binding relation between the candidate beam and the candidate BWP.

In an embodiment of the disclosure, a detailed description of step 1501 can be referred to the relevant description in the above-described embodiments, which is not repeated in the embodiments of the disclosure.

Step 1502, a trigger event is sent to the satellite UE, in which the trigger event includes a time-based trigger event.

A detailed description of sending the trigger event to the satellite UE can be referred to the above embodiments, which is not repeated in the embodiments of the disclosure.

Step 1503, time indication information is sent to the satellite UE, in which the time indication information is configured to indicate a preset service time period of the current service beam.

In an embodiment of the disclosure, the time indication information may be the preset service time period of the current service beam directly. In another embodiment of the disclosure, the time indication information may be satellite ephemeris information, so that the satellite UE may determine the preset service time period of the current service beam based on the ephemeris information. So that the satellite UE may determine whether it needs to perform the service beam switching based on the preset service time period of the current service beam and the time-based trigger event.

In conclusion, in the beam switching method provided by the embodiments of the disclosure, the satellite UE may determine whether it needs to perform the service beam switching based on the trigger event. When it is determined that the satellite UE needs to perform the service beam switching based on the trigger event, the service beam switching may be performed, so that the beam switching can be performed quickly and accurately in the NTN system, thereby ensuring service continuity and high efficiency.

FIG. 16 is a schematic diagram of a beam switching apparatus 1600 provided by an embodiment of the disclosure. As illustrated in FIG. 16, the apparatus 1600 includes:
a determining module 1601, configured to determine whether the satellite UE needs to perform service beam switching; and
a switching module 1602, configured to perform the service beam switching on the satellite UE based on a determination result.

In conclusion, with the beam switching apparatus provided in the embodiments of the disclosure, the satellite UE may determine whether it needs to perform the service beam switching, and perform the service beam switching on the satellite UE based on the determination result. In the embodiment of the disclosure, the satellite UE determines whether it needs to perform the service beam switching based on a trigger event. When it is determined that the satellite UE needs to perform the service beam switching based on the trigger event, the satellite UE may perform the service beam switching, so that the beam switching can be performed quickly and accurately in the NTN system, thereby ensuring service continuity and high efficiency.

In an embodiment of the disclosure, the determining module 1601 is further configured to:
determine whether the satellite UE needs to perform the service beam switching based on a trigger event.

In another embodiment of the disclosure, the trigger event includes at least one of:
a location-based trigger event, a signal quality-based trigger event, or a time-based trigger event.

In another embodiment of the disclosure, the location-based trigger event includes:
determining whether to perform the service beam switching based on a distance between a location of the satellite UE and a coverage boundary of a current service beam of the satellite UE; and/or
determining whether to perform the service beam switching based on a signal quality of the current service beam.

In another embodiment of the disclosure, the signal quality-based trigger event includes:
determining whether to perform the service beam switching based on a signal quality of a neighboring service beam.

In another embodiment of the disclosure, the time-based trigger event includes:
determining whether to perform the service beam switching based on a preset service time period of the current service beam of the satellite UE and a time period served by the current service beam.

In another embodiment of the disclosure, the apparatus is further configured to:
obtain time indication information sent by a base station, in which the time indication information is configured to indicate the preset service time period of the current service beam.

In another embodiment of the disclosure, the apparatus is further configured to:
determine the trigger event based on a protocol agreement.

In another embodiment of the disclosure, the apparatus is further configured to:
receive the trigger event sent by a base station via a high-layer signaling or a physical layer signaling.

In another embodiment of the disclosure, the apparatus is further configured to:
receive configuration information sent by a base station, in which the configuration information includes a candidate beam set and/or a candidate BWP set;
in which, when the configuration information includes the candidate beam set and the candidate BWP set, if a candidate beam in the candidate beam set has a binding relation with a candidate BWP in the candidate BWP set, the configuration information further includes the binding relation between the candidate beam and the candidate BWP.

In an embodiment of the disclosure, the switching module 1602 is further configured to:
when the determination result indicates that the service beam switching needs to be performed, determine a target beam from the candidate beam set, and/or determine a target BWP from the candidate BWP set, and switch to the target beam and/or the target BWP.

In another embodiment of the disclosure, the apparatus is further configured to:
send first indication information to the base station based on the target beam and/or the target BWP, to inform the base station that the satellite UE switches to the target beam and/or the target BWP.

In another embodiment of the disclosure, the switching module 1602 is further configured to:
when the determination result indicates that the service beam switching needs to be performed, determine a target beam from the candidate beam set, and/or determine a target BWP from the candidate BWP set, and send second indication information to the base station, in which the second indication information includes at least one of the determination result, the target beam or the target BWP; and
receive a switching instruction sent by the base station, and perform the service beam switching based on the switching instruction.

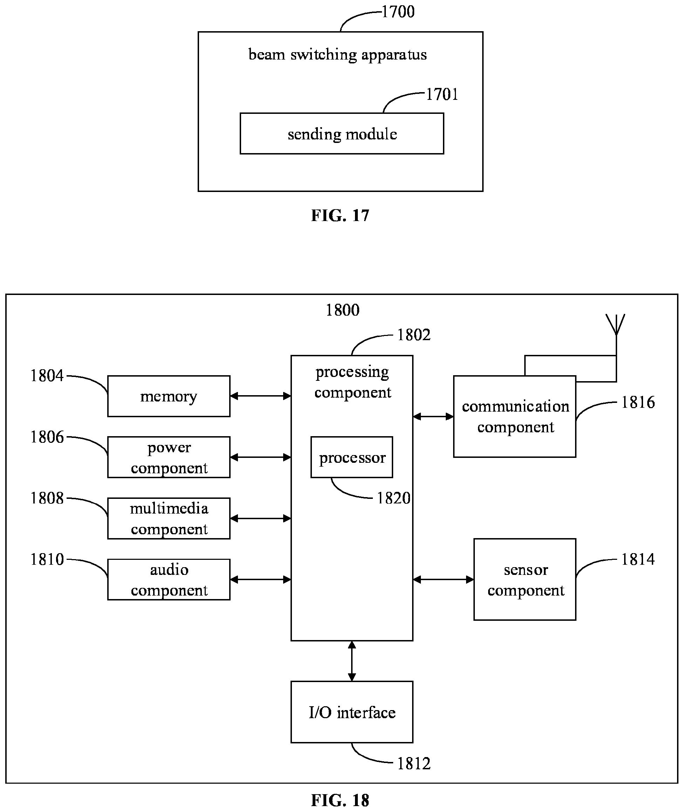

FIG. 17 is a schematic diagram of a beam switching apparatus 1700 provided by an embodiment. As illustrated in FIG. 17, the apparatus 1700 includes:
a sending module 1701, configured to send configuration information to a satellite UE, in which the configuration information includes a candidate beam set and/or a candidate BWP set;
in which, when the configuration information includes the candidate beam set and the candidate BWP set, if a candidate beam in the candidate beam set has a binding relation with a candidate BWP in the candidate BWP set, the configuration information further includes the binding relation between the candidate beam and the candidate BWP.

In conclusion, with the beam switching apparatus provided in the embodiments of the disclosure, the satellite UE may determine whether it needs to perform the service beam switching based on the trigger event. When it is determined that the satellite UE needs to perform the service beam switching based on the trigger event, the service beam switching may be performed, so that the beam switching can be performed quickly and accurately in the NTN system, thereby ensuring service continuity and high efficiency.

In another embodiment of the disclosure, the apparatus is further configured to:
send a trigger event to the satellite UE via a high-layer signaling or a physical layer signaling.

In another embodiment of the disclosure, the trigger event includes at least one of:
a location-based trigger event, a signal quality-based trigger event, or a time-based trigger event.

In another embodiment of the disclosure, the location-based trigger event includes:
determining whether to perform the service beam switching based on a distance between a location of the satellite UE and a coverage boundary of a current service beam of the satellite UE; and/or
determining whether to perform the service beam switching based on a signal quality of the current service beam.

In another embodiment of the disclosure, the signal quality-based trigger event includes:
determining whether to perform the service beam switching based on a signal quality of a neighboring service beam.

In another embodiment of the disclosure, the time-based trigger event includes:
determining whether to perform the service beam switching based on a preset service time period of the current service beam of the satellite UE and a time period served by of the current service beam.

In another embodiment of the disclosure, the apparatus is further configured to:
send the preset service time period of the current service beam to the satellite UE.

In another embodiment of the disclosure, the apparatus is further configured to:
detect whether first indication information sent by the satellite UE is received on a candidate beam in the candidate beam set and/or a candidate BWP in the candidate BWP set;
determine a candidate beam on which the first indication information is sent as a target beam, and/or, determine a candidate BWP on which the first indication information is sent as a target BWP; and
communicate with the satellite UE based on the target beam and/or the target BWP.

In another embodiment of the disclosure, the apparatus is further configured to:
receive second indication information sent by the satellite UE, in which the second indication information includes at least one of: a determination result for indicating whether the satellite UE needs to perform the service beam switching, a target beam, or a target BWP; and
send a switching instruction to the satellite UE.

The embodiments of the disclosure provide a computer storage medium having executable programs stored thereon. When the executable programs are executed by a processor, the method of any one of FIGS. 1-10 or FIGS. 11-15 is performed.

In order to realize the above embodiments, the disclosure also provides a computer program product including computer programs. When the computer programs are executed by a processor, the method of any one of FIGS. 1-10 or FIGS. 11-15 is performed.

In addition, to implement the above embodiments, the disclosure further provides a computer program. When the computer program is executed by a processor, the method of any one of FIGS. 1-10 or FIGS. 11-15 is performed.

FIG. 18 is a block diagram of a UE 1800 provided by an embodiment of the disclosure. For example, the UE 1800 may be a mobile phone, a computer, a digital broadcasting terminal device, a message transceiver device, a game console, a tablet device, a medical device, a fitness device and a personal digital assistant.

As illustrated in FIG. 18, the UE 1800 may include at least one of the following components: a processing component 1802, a memory 1804, a power component 1806, a multimedia component 1808, an audio component 1810, an input/output (I/O) interface 1818, a sensor component 1813, or a communication component 1816.

The processing component 1802 typically controls overall operations of the UE 1800, such as the operations associated with display, telephone calls, data communications, camera operations, and recording operations. The processing component 1802 may include at least one processor 1820 to execute instructions to perform all or part of the steps in the above described methods. Moreover, the processing component 1802 may include at least one module which facilitates the interaction between the processing component 1802 and other components. For example, the processing component 1802 may include a multimedia module to facilitate the interaction between the multimedia component 1808 and the processing component 1802.

The memory 1804 is configured to store various types of data to support the operation of the UE 1800. Examples of such data include instructions for any applications or methods operated on the UE 1800, contact data, phonebook data, messages, pictures, videos, etc. The memory 1804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1806 provides power to various components of the UE 1800. The power component 1806 may include a power management system, at least one power source, and any other components associated with the generation, management, and distribution of power in the UE 1800.

The multimedia component 1808 includes a screen providing an output interface between the UE 1800 and the user. In some embodiments, the screen may include a Liquid Crystal Display (LCD) and a Touch Panel (TP). If the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a duration and a pressure associated with the touch or swipe action. In some embodiments, the multimedia component 1808 includes a front-facing camera and/or a rear-facing camera. When the UE 1800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1810 is configured to output and/or input audio signals. For example, the audio component 1810 includes a microphone (MIC) configured to receive an external audio signal when the UE 1800 is in an operation mode, such as a call mode, a recording mode, and a voice recognition mode. The received audio signal may be further stored in the memory 1804 or transmitted via the communication component 1816. In some embodiments, the audio component 1810 further includes a speaker to output audio signals.

The I/O interface 1812 provides an interface between the processing component 1802 and peripheral interface modules, such as a keyboard, a click wheel, buttons, and the like. The buttons may include, but are not limited to, a home button, a volume button, a starting button, and a locking button.

The sensor component 1813 includes at least one sensor to provide status assessments of various aspects of the UE 1800. For instance, the sensor component 1813 may detect an open/closed status of the UE 1800, relative positioning of components, e.g., the display and the keypad, of the UE 1800, a change in position of the UE 1800 or a component of the UE 1800, a presence or absence of a user contact with the UE 1800, an orientation or an acceleration/deceleration of the UE 1800, and a change in temperature of the UE 1800. The sensor component 1813 may include a proximity sensor configured to detect the presence of nearby objects without any physical contact. The sensor component 1813 may also include a light sensor, such as a Complementary Metal Oxide Semiconductor (CMOS) or a Charge-Coupled Device (CCD) image sensor, for use in imaging applications. In some embodiments, the sensor component 1813 may also include an accelerometer sensor, a gyroscope sensor, a magnetic sensor, a pressure sensor, or a temperature sensor.

The communication component 1816 is configured to facilitate communication, wired or wirelessly, between the UE 1800 and other devices. The UE 1800 can access a wireless network based on a communication standard, such as Wi-Fi, 2G or 3G, or a combination thereof. In an exemplary embodiment, the communication component 1816 receives a broadcast signal from an external broadcast management system or broadcast associated information via a broadcast channel. In an exemplary embodiment, the communication component 1816 further includes a Near Field Communication (NFC) module to facilitate short-range communication. For example, the NFC module may be implemented based on a Radio Frequency Identification (RFID) technology, an Infrared Data Association (IrDA) technology, an Ultra-Wide Band (UWB) technology, a Blue Tooth (BT) technology, and other technologies.

In an exemplary embodiment, the UE 1800 may be implemented with at least one Application Specific Integrated Circuit (ASIC), Digital Signal Processor (DSP), Digital Signal Processing Device (DSPD), Programmable Logic Device (PLD), Field Programmable Gate Array (FPGA), controller, micro-controller, microprocessor or other electronic components, for performing the above described method.

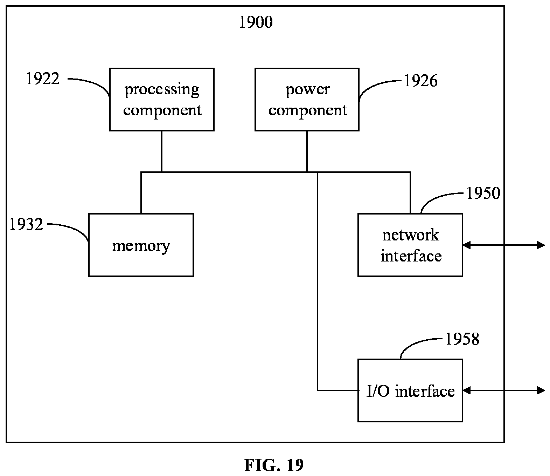

FIG. 19 is a block diagram of a base station 1900 provided by an embodiment of the disclosure. For example, the base station 1900 may be provided as a base station. As illustrated in FIG. 19, the base station 1900 includes a processing component 1911, which further includes at least one processor, and memory resources represented by a memory 1932 for storing instructions that may be executed by a processing component 1922, such as an application program. The application program stored in the memory 1932 may include one or more modules each corresponding to a set of instructions. In addition, the processing component 1915 is configured to execute instructions to perform any of the methods performed by the base station as described in the foregoing method, e.g., the method shown in FIG. 1.

The base station 1900 may also include a power component 1926 configured to perform power management of the base station 1900, a wired or wireless network interface 1950 configured to connect the base station 1900 to a network, and an input/output (I/O) interface 1958. The base station 1900 may operate based on an operating system stored in the memory 1932, such as Windows Server ^{™}, Mac OS X^{™}, Unix ^{™}, Linux ^{™}, Free BSD^{™} or the like.

Other embodiments of the disclosure will be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and embodiments are considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure is only limited by the appended claims.

## Claims

1. A beam switching method, performed by a satellite user equipment (UE), comprising:
determining whether the satellite UE needs to perform service beam switching; and
performing the service beam switching on the satellite UE based on a determination result.

2. The method of claim 1, wherein determining whether the satellite UE needs to perform service beam switching comprises: determining whether the satellite UE needs to perform the service beam switching based on a trigger event;
wherein the trigger event comprises at least one of:
a location-based trigger event, a signal quality-based trigger event, or a time-based trigger event.

3. The method of claim 2, wherein the location-based trigger event comprises:
determining whether to perform the service beam switching based on a distance between a location of the satellite UE and a coverage boundary of a current service beam of the satellite UE; and/or
determining whether to perform the service beam switching based on a signal quality of the current service beam.

4. The method of claim 2, wherein the signal quality-based trigger event comprises:
determining whether to perform the service beam switching based on a signal quality of a neighboring service beam.

5. The method of claim 2, wherein the time-based trigger event comprises:
determining whether to perform the service beam switching based on a preset service time period of a current service beam of the satellite UE and a time period served by the current service beam.

6. The method of claim 5, further comprising:
obtaining time indication information sent by a base station, wherein the time indication information is configured to indicate the preset service time period of the current service beam.

7. The method of claim 2, further comprising:
determining the trigger event based on a protocol agreement.

8. The method of claim 2, further comprising:
receiving the trigger event sent by a base station via a high-layer signaling or a physical layer signaling.

9. The method of any one of claims 3-5, further comprising:
receiving configuration information sent by a base station, wherein the configuration information comprises a candidate beam set and/or a candidate Bandwidth Part (BWP) set;
wherein when the configuration information comprises the candidate beam set and the candidate BWP set, if a candidate beam in the candidate beam set has a binding relation with a candidate BWP in the candidate BWP set, the configuration information further comprises the binding relation between the candidate beam and the candidate BWP.

10. The method of claim 9, wherein performing the service beam switching based on the determination result comprises:
when the determination result indicates that the service beam switching needs to be performed, determining a target beam from the candidate beam set, and/or determining a target BWP from the candidate BWP set, and switching to the target beam and/or the target BWP.

11. The method of claim 10, further comprising:
sending first indication information to the base station based on the target beam and/or the target BWP, to inform the base station that the satellite UE switches to the target beam and/or the target BWP.

12. The method of claim 9, wherein performing the service beam switching based on the determination result comprises:
when the determination result indicates that the service beam switching needs to be performed, determining a target beam from the candidate beam set, and/or determining a target BWP from the candidate BWP set, and sending second indication information to the base station, wherein the second indication information comprises at least one of the determination result, the target beam or the target BWP; and
receiving a switching instruction sent by the base station, and performing the service beam switching based on the switching instruction.

13. A beam switching method, performed by a base station, comprising:
sending configuration information to a satellite user equipment (UE), wherein the configuration information comprises a candidate beam set and/or a candidate Bandwidth Part (BWP) set;
wherein when the configuration information comprises the candidate beam set and the candidate BWP set, if a candidate beam in the candidate beam set has a binding relation with a candidate BWP in the candidate BWP set, the configuration information further comprises the binding relation between the candidate beam and the candidate BWP.

14. The method of claim 13, further comprising:
sending a trigger event to the satellite UE via a high-layer signaling or a physical layer signaling.

15. The method of claim 14, wherein the trigger event comprises at least one of:
a location-based trigger event, a signal quality-based trigger event, or a time-based trigger event.

16. The method of claim 15, wherein the location-based trigger event comprises:
determining whether to perform service beam switching based on a distance between a location of the satellite UE and a coverage boundary of a current service beam of the satellite UE; and/or
determining whether to perform the service beam switching based on a signal quality of the current service beam.

17. The method of claim 15, wherein the signal quality-based trigger event comprises:
determining whether to perform service beam switching based on a signal quality of a neighboring service beam.

18. The method of claim 15, wherein the time-based trigger event comprises:
determining whether to perform service beam switching based on a preset service time period of a current service beam of the satellite UE and a time period served by the current service beam.

19. The method of claim 13, further comprising:
sending time indication information to the satellite UE, wherein the time indication information is configured to indicate the preset service time period of the current service beam.

20. The method of claim 13, further comprising:
detecting whether first indication information sent by the satellite UE is received on a candidate beam in the candidate beam set and/or a candidate BWP in the candidate BWP set;
determining a candidate beam on which the first indication information is sent as a target beam, and/or, determining a candidate BWP on which the first indication information is sent as a target BWP; and
communicating with the satellite UE based on the target beam and/or the target BWP.

21. The method of claim 13, further comprising:
receiving second indication information sent by the satellite UE, wherein the second indication information comprises at least one of: a determination result for indicating whether the satellite UE needs to perform service beam switching, a target beam, or a target BWP; and
sending a switching instruction to the satellite UE.

22. A beam switching apparatus, comprising:
a determining module, configured to determine whether a satellite user equipment (UE) needs to perform service beam switching; and
a switching module, configured to perform the service beam switching on the satellite UE based on a determination result.

23. A beam switching apparatus, comprising:
a sending module, configured to send configuration information to a satellite user equipment (UE), wherein the configuration information comprises a candidate beam set and/or a candidate Bandwidth Part (BWP) set;
wherein when the configuration information comprises the candidate beam set and the candidate BWP set, if a candidate beam in the candidate beam set has a binding relation with a candidate BWP in the candidate BWP set, the configuration information further comprises the binding relation between the candidate beam and the candidate BWP.

24. A user equipment (UE), comprising: a transceiver, a memory, and a processor connected to the transceiver and the memory respectively, configured to control sending and receiving of wireless signals of the transceiver by executing computer-executable instructions on the memory, and capable of performing the method of any one of claims 1-12.

25. A base station, comprising: a transceiver, a memory, and a processor connected to the transceiver and the memory respectively, configured to control sending and receiving of wireless signals of the transceiver by executing computer-executable instructions on the memory, and capable of performing the method of any one of claims 13-21.

26. A computer storage medium having computer-executable instructions stored thereon that, when executed by a processor, the method of any one of claims 1-12 or the method of any one of claims 13-21 is implemented.
